# EUROPÄISCHE PATENTSCHRIFT

(11) **EP 1 178 893 B1**
(45) Veröffentlichungstag und Bekanntmachung des Hinweises auf die Patenterteilung: **18.12.2002**
(21) Anmeldenummer: 00938561.8
(22) Anmeldetag: 18.05.2000
(51) Int. Cl.: B60G 21/055

(54) **STABILISATOR FÜR EIN KRAFTFAHRZEUG**
STABILIZER FOR A MOTOR VEHICLE
STABILISATEUR POUR VEHICULE AUTOMOBILE

(30) Priorität: 20.05.1999 DE 19923100
(43) Veröffentlichungstag der Anmeldung: 13.02.2002
(73) Patentinhaber: PNP Luftfedersysteme GmbH, 19089 Crivitz (DE)
(72) Erfinder: BEETZ, Stefan, D-55743 Idar-Oberstein (DE); REICHEL, Klaus, D-19374 Domsühl (DE)
(74) Vertreter: Jaap, Reinhard
(86) Internationale Anmeldenummer: DE0001558
(87) Internationale Veröffentlichungsnummer: WO00071371

(56) Entgegenhaltungen:
- US-A- 4 206 935
- PATENT ABSTRACTS OF JAPAN vol. 014, no. 464 (M-1033), 9. Oktober 1990 (1990-10-09) & JP 02 185818 A (MITSUBISHI AUTOMOB ENG CO LTD;OTHERS: 01), 20. Juli 1990 (1990-07-20)

## Beschreibung

Die Erfindung bezieht sich auf einen Stabilisator nach den Merkmalen des Oberbegriffs des Anspruchs 1.
Solche Stabilisatoren werden in der Fahrzeugtechnik eingesetzt.

Grundsätzlich ist jeder Achse eines Kraftfahrzeuges ein nach dem Drehstabprinzip arbeitender Stabilisator zugeordnet, der parallel zur Achse verläuft und an beiden Enden an einer Radaufhängung befestigt ist. Diese Stabilisatoren haben die Aufgabe, die Übertragung der von den Fahrbahnverhältnissen verursachten und von den Rädern ausgehenden Wankbewegungen auf das Fahrzeug zu verhindern bzw. abzuschwächen. Solche Wankbewegungen entstehen in der Hauptsache in Fahrbahnkurven oder bei Fahrbahnunebenheiten, wie beispielsweise Schlaglöcher oder Fahrrinnen.
Es gibt einteilige Stabilisatoren, die in ihrer Dimensionierung und in ihrer Materialbeschaffenheit so ausgelegt sind. dass sie Torsionskräfte in einer vorbestimmten Größenordnung aufnehmen und entsprechende Gegenkräfte aufbringen können. Einteilige Stabilisatoren reagieren aber auf unterschiedliche Belastungen entweder zu weich oder zu hart, was sich nachteilig auf den Fahrkomfort auswirkt und können erhöhte Belastungen nicht aufnehmen.
Es werden daher verstärkt zweigeteilte Stabilisatoren verwendet, die durch eine axial feststehende und drehelastische Kupplung miteinander verbunden sind. Eine solche Kupplung zeigt beispielsweise die DE 43 42 360 C2, bei der zwischen den beiden Stabilisatorteilen ein Gummilederelement zwischengeschaltet ist. Dieses Gummifederelement weist gegenüber den Stabilisatoren eine weichere Federkonstante auf und vergrößert somit den möglichen Verdrehwinkel zwischen den beiden Stabilisatoren. Damit kann größeren Fahrbahnbelastungen entgegengewirkt werden. Der Verdrehwinkel reicht aber nicht bei extrem unterschiedlich auf die Räder wirkenden Fahrbahnunebenheiten aus, wie sie beispielsweise im Gelände auftreten. Außerdem besteht wegen des Gummifederelementes ein Schlupf zwischen den beiden Stabilisatorteilen, was sich bei Geradeausfahrt und ebener Fahrbahn nachteilig auf das Fahrverhalten auswirkt.
Für solche extremen Belastungsfälle werden verstärkt zweigeteilte Stabilisatoren mit einer schaltbaren Kupplung verwendet, wie sie beispielsweise in der DE 197 05 809 A1 beschrieben wird. Diese Kupplung ist als Reibkupplung ausgeführt und wird hydraulisch in Abhängigkeit von der Belastung der Räder gesteuert. Beide Kupplungshälften werden bei einer hohen äußeren Belastung reibschlüssig verbunden und bei einer fehlenden Belastung getrennt. Bei einer geringen Belastung der Räder stellt sich zwischen den beiden Stabilisatorhälften ein Schlupf ein. Solche Reibkupplungen sind nicht sicher, da auch in der geschlossenen Stellung ein Schlupf in der Kupplung nicht auszuschließen ist und in der getrennten Stellung unter Ausschaltung der Stabilisatorfunktion ein unbegrenzter Verdrehwinkel möglich ist. Das ist ein Sicherheitsrisiko.

Von allen bekannten Lösungen gibt es keine schaltbare Kupplung, die die beiden Stabilisatorhälften im gesperrten Zustand spielfrei verbindet und im entsperrten Zustand sicher trennt und die im entsperrten Zustand nur einen begrenzten Verschwenkwinkel von wahlweise plus/minus 40° zulässt.

Der Erfindung liegt daher die Aufgabe zu Grunde, einen gattungsgcmäßen Stabilisator zu entwickeln, der die genannten Nachteile des Standes der Technik beseitigt und der im Fail-Safe-Fall selbstständig schließt und im gekuppelten Zustand nicht selbstständig trennt.

Diese Aufgabe wird durch die kennzeichnenden Merkmale des Anspruchs 1 gelöst.

Zweckdienliche Ausgestaltungen der Erfindung ergeben sich aus den Merkmalen der Ansprüche 2 bis 10.

Die Erfindung beseitigt die genannten Nachteile des Standes der Technik.
Der besondere Vorteil ergibt sich daraus, dass beide radialen Mitnehmer auf einer gemeinsamen Ebene angeordnet sind und auch in jedem Betriebszustand dort verbleiben und nur der Verstellkolben mit seinen Verriegelungselementen axial verschiebbar angeordnet ist. Dadurch stellt sich im gekuppelten Zustand eine spiel- und schlupffreie Verbindung der beiden Stabilisatorteile ein. Aus der Anordnung beider radialen Mitnehmer in einer Ebene ergibt sich auch, dass keine weiteren Kraftübertragungsebenen bestehen, die die wirksame Länge der Stabilisatorteile verkürzen würden.

Die Erfindung soll nachstehend an Hand eines Ausführungsbeispieles näher erläutert werden.

Dazu zeigen
- Fig. 1:: eine vereinfachte Darstellung einer Fahrzeugachse mit einem Stabilisator,
- Fig. 2.: die erfindungsgemäße Kupplung im Schnitt,
- Fig. 3:: die Kupplung im verriegelten Zustand und
- Fig. 4:: die Kupplung im entriegelten Zustand in der Position eines maximalen Verdrehwinkels mit Darstellung der Drebwinkelbegrenzung.

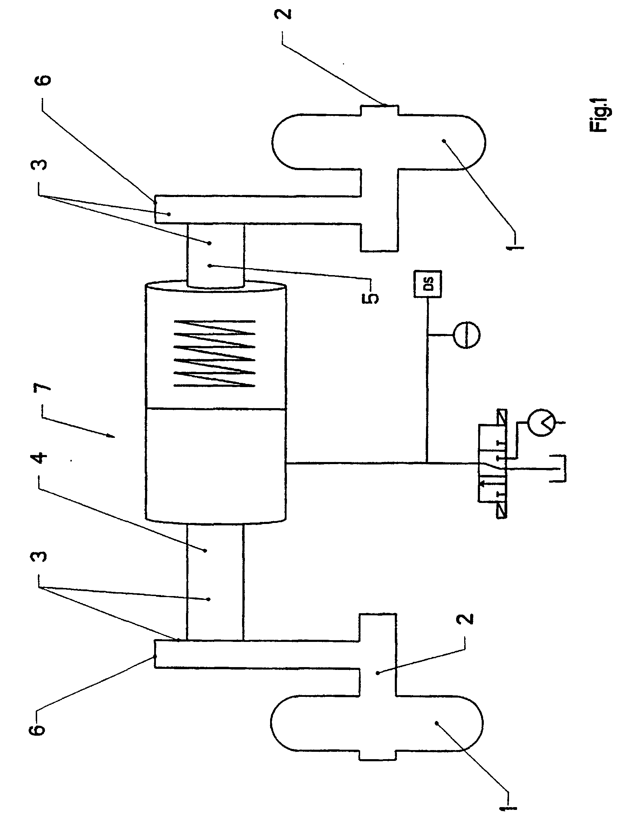

Nach der Fig. 1 besteht jede Achse eines Kraftfahrzeuges grundsätzlich aus den beiden Rädern 1 und einer, beide Räder 1 tragenden. Achse 2. Parallel zur Achse 2 befindet sich ein geteilter Stabilisator 3 mit seinen beiden Stabilisatorteilen 4 und 5, wobei jedes Stabilisatorteil 4, 5 mit einer nicht dargestellten Radaufhängung des betreffenden Rades 1 und andererseits über eine Lagerstelle 6 mit dem Fahrzeugaufbau verbunden ist. Zwischen den beiden Stabilisatorteilen 4 und 5 ist eine Kupplung 7 angeordnet, die beide Stabilisatorteile 4, 5 zum Beispiel über eine Verzahnung miteinander zu einem durchgehenden Stabilisator 3 verbindet oder voneinander trennt. Der verbundene Stabilisator 3 ist in seiner Dimensionierung und in seiner Materialbeschaffenheit darauf abgestimmt, die über die Räder 1 eingeleiteten Torsionskräfte aufzunehmen und entsprechende Gegenkräfte aufzubauen. Damit werden diese Kräfte nicht auf den Fahrzeugaufbau übertragen oder zumindest abgedämpft.

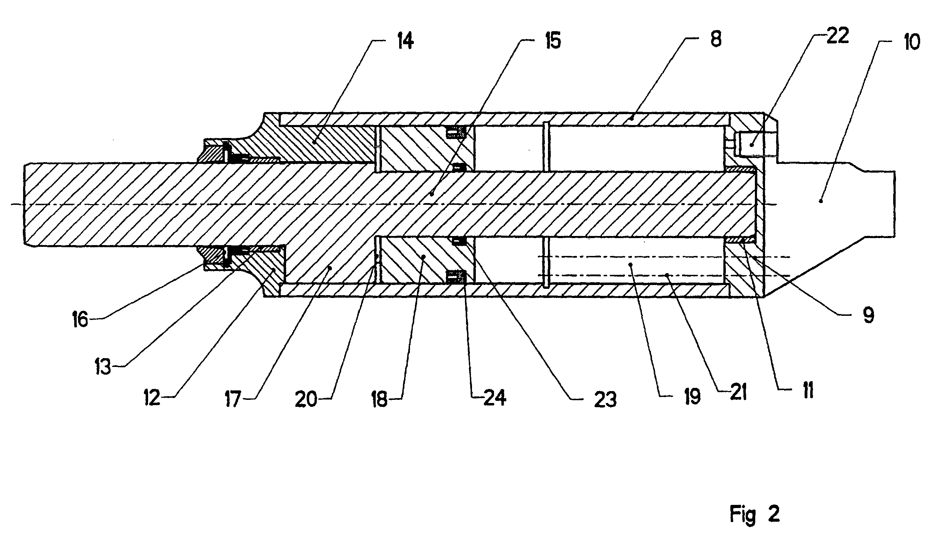

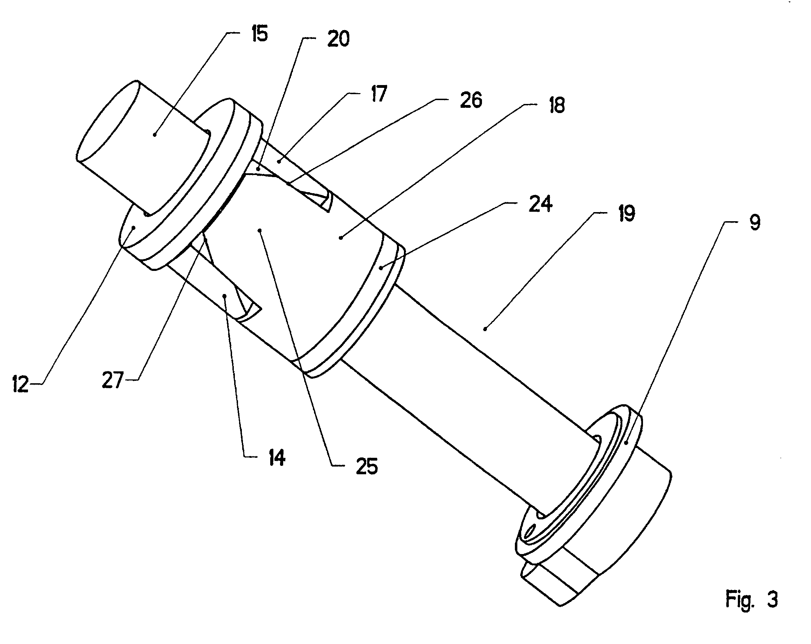

Die Kupplung 7 ist axial schaltbar und formschlüssig ausgeführt. Dazu besteht die Kupplung 7 gemäß der Fig. 2 bis 4 aus einem zylindrischen Gehäuse 8 mit einem geschlossenen Boden 9, an dem sich ein Verbindungszapfen 10 für einen der beiden Stabilisatorteile 4, 5 anschließt. Auf der inneren Seite des Bodens 9 befindet sich eine Lagerstelle 11 für ein Drehgelenk. Dem Boden 9 gegenüberliegend ist das Gehäuse 8 mit einem Deckel 12 drehfest verschlossen, der mit einer durchgehenden Lagerbohrung 13 für ein weiteres Drehgelenk und mit einem, in das Innere des zylindrischen Gehäuses 8 ragenden radialen Mitnehmer 14 ausgerüstet ist. Der radiale Mitnehmer 14 befindet sich im radialen Raum zwischen der durchgehenden Lagerbohrung 13 und der Innenwand des zylindrischen Gehäuses 8. Der radiale Mitnehmer 14 kann bei gleicher Anordnung auch direkt mit dem zylindrischen Gehäuse 8 verbunden sein. Im Gehäuse 8 ist weiterhin eine Welle 15 eingepasst, die das Innere des zylindrischen Gehäuses 8 durchdringt und die einerseits in der Lagerstelle 11 im Boden 9 des Gehäuses 8 und andererseits in der Lagerbohrung 13 im Deckel 12 des Gehäuses 8 drehbar gelagert ist. Die Welle 15 ist mit ihrem außenliegenden Zapfen mit dem anderen Stabilisatorteil 4, 5 verbunden. Die Lagerbohrung 13 im Deckel 12 ist nach außen durch entsprechende Dichtelemente 16 abgedichtet. Auf der Welle 15 befindet sich ein weiterer radialer Mitnehmer 17, der mit der Welle 15 drehbar ist und der in gleicher Weise wie der radiale Mitnehmer 14 im Gehäuse 8 angeordnet und gestaltet ist. Damit liegen der radiale Mitnehmer 14 am zylindrischen Gehäuse 8 und der radiale Mitnehmer 17 auf der Welle 15 auf einer gemeinsamen Ebene, wodurch beide radialen Mitnehmer 14 und 17 nur begrenzt zueinander schwenkbar sind.

Im Inneren des zylindrischen Gehäuses 8 befindet sich weiterhin ein hydraulisch beaufschlagbarer Verriegelkolben 18, der auf der Welle 15 axial verschiebbar und radial drehbar geführt ist und der den Innenraum des zylindrischen Gehäuses 8 bodenseitig in einen Druckfederraum 19 und deckelseitig in einen Druckraum 20 aufteilt. Im Druckfederraum 19 ist eine Druckfeder 21 eingesetzt, die sich am Boden 9 des Gehäuses 8 abstützt und die den Verriegelkolben 18 belastet. Der Druckfedcrraum 19 ist über einen Leckölanschluss 22 mit einem Hydrauliktank verbunden. Dagegen hat der Druckraum 20 über einen nicht dargestellten Druckölanschluss Verbindung mit einer hydraulischen Druckölversorgungsanlage. Der Verriegelkolben 18 ist weiterhin mit einem inneren Dichtelement 23 und mit einem äußeren Dichtelement 24 ausgerüstet, die den Druckraum 20 und den Druckfederraum 19 gegeneinander hydraulisch abdichten.

Auf der Deckelseite des Verriegelkolbens 18 sind zwei Verriegelungselemente 25 ausgebildet, die in gleicher Weise wie die beiden radialen Mitnehmer 14 und 17 im radialen Freiraum zwischen der Welle 15 und der Wandung des Gehäuses 8 liegen und die beide gegenüberliegend, also um 180° zueinander versetzt, angeordnet sind. Die Form und die Abmessungen der beiden Verriegelungselemente 25 sind in besonderer Weise auf die Formen und Abmessungen der beiden radialen Mitnehmer 14 und 17 abgestimmt.
So haben die beiden Verriegelungselemente 25 eine Breite. die die beiden Lücken zwischen den beiden radialen Mitnehmern 14 und 17 spielfrei ausfüllen und eine Länge, die in der einen Endstellung des Verstellkolbens 18 einen Eingriff der Verriegelungselemente 25 in den Bereich der beiden radialen Mitnehmern 14, 17 ermöglichen. Desweiteren ist der Verriegelkolben 18 mit einer Hubbegrenzung ausgestattet, die verhindert, dass die beiden radialen Mitnehmer 14, 17 und die beiden Verriegelungselemente 25 in der anderen Endstellung des Verriegelkolbens 18 außer Eingriff geraten. In dieser Endstellung besteht also weiterhin eine positive Längenüberdeckung der radialen Mitnehmer 14, 17 und der Verriegelungselemente 25 des Verriegelkolbens 18.

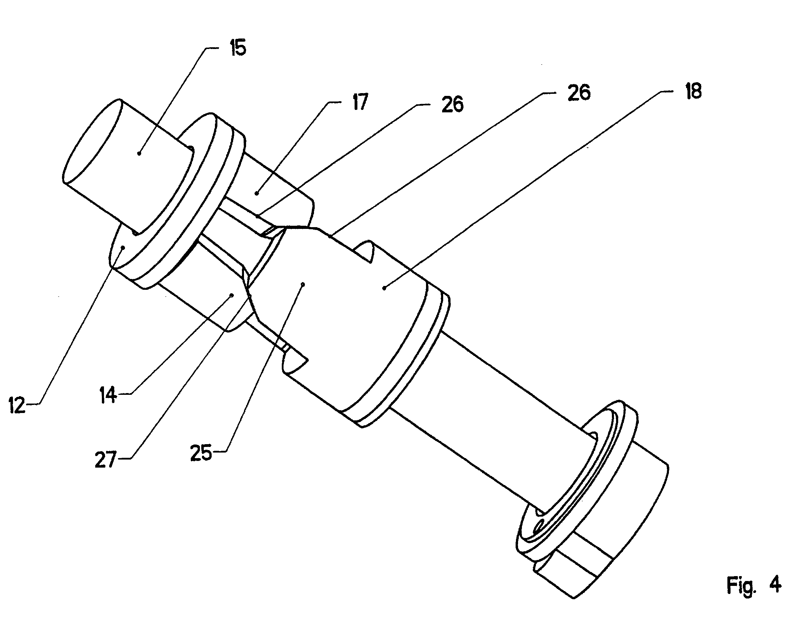

Die sich gegenüberliegenden und miteinander kommunizierenden Berührungsflächen der beiden Mitnehmer 14, 17 und der beiden Vcrriegelungselemente 25 setzen sich jeweils aus einer Konusfläche 26 mit einem kleineren Winkel und einer Konusfläche 27 mit einem größeren Winkel zusammen, wobei die Konusfläche 26 mit kleinerem Winkel eine größere axiale Länge aufweist wie die Konusfläche 27 mit größerem Winkel und die Konusfläche 27 mit größerem Winkel sich am jeweiligen freien Ende der Mitnehmer 14, 17 bzw. der Verriegelungselemente 25 befindet.
Die Konizität der Konusfläche 26 mit kleinerem Winkel ermöglicht eine stets spielfreie Verbindung der beiden Mitnehmern 14, 17 und der beiden Verriegelungselemente 25. Dabei ist der Konuswinkel so gering gewählt, dass die axiale Kraftkomponente einer von außen eingeleiteten radialen Kraft die Federkraft der Druckfeder 21 nicht übersteigt.
Die Konusfläche 27 mit größerem Winkel besitzt einen Winkel von etwa 45°. Aufgrund des größeren Konus und aufgrund der durch die Hubbegrenzung bedingten Längenüberdeckung der beiden Mitnehmer 14, 17 und der beiden Verriegelungselemente 25 bekommen beide radialen Mitnehmer 14, 17 in der geöffneten Endstellung des Verriegelkolbens 18 einen radialen Spielraum, der zu beiden Seiten dadurch begrenzt wird, dass sich einer der beiden radialen Mitnehmer 14, 17 über jeweils einen der beiden Verriegelungselemente 25 am anderen radialen Mitnehmer 14, 17 abstützt. Diesen Zustand zeigt die Fig. 4. Der dadurch mögliche Verdrehwinkel zwischen den beiden Stabilisatorteilen 4 und 5 kann an die unterschiedlichsten Einsatzfälle angepasst sein und beträgt vorzugsweise 40°.

Bei normalen Fahrbahnverhältnissen, beispielsweise im Straßenverkehr, wird der Druckraum 20 im zylindrischen Gehäuse 8 drucklos gehalten, sodass die Druckfeder 21 den Verstellkolben 18 belastet und ihn in Richtung der radialen Mitnehmer 14, 17 verschiebt. Es kommt zu seitlichen Berührungen zwischen den radialen Mitnehmern 14, 17 und den beiden Verriegelungselementen 25. Dadurch zentrieren sich die radialen Mitnehmer 14, 17 und der ebenfalls drehbare Verriegelkolben 18, sodass die beiden Verriegelungselemente 25 soweit in die Zwischenräume zwischen den beiden radialen Mitnehmern 14, 17 eindringen, bis die Konusflächen 26 mit kleinerem Winkel zur Anlage kommen. In dieser Position wird der Verriegelkolben 18 durch die Kraft der Druckfeder 21 über den ganzen Belastungsbereich gehalten. Die so gekuppelten Stabilisatorteile 4, 5 verhalten sich dabei wie ein einteiliger Stabilisator.
Bei abnormalen Fahrbahnverhältnissen, wie sie beispielsweise im Gelände auftreten, reicht der Torsionsbereich des gekuppelten Stabilisators 3 nicht mehr aus, um die Wankbewegungen der Räder auszugleichen. In solchen Fällen wird durch eine Betätigung einer vorzugsweise hydraulischen Druckversorgungsanlage der Druckraum 20 der Kupplung unter Druck gesetzt, sodass sich der Verriegelkolben 18 entgegen der Kraft der Druckfeder 21 aus dem Kontaktbereich der Konusflächen 26 mit kleinerem Winkel löst und bis in seine durch die Hubbegrenzung definierten Endstellung verschiebt.
Durch Aufrechterhaltung des hydraulischen Druckes im Druckraum 20 wird der Verriegelkolben 18 in dieser Position gehalten. Somit sind beide Stabilisatorteile 4, 5 getrennt, bleiben aber über einen vorbestimmten Schwenkbereich relativ zueinander frei drehbar. Bei unterschiedlichen Belastungen der beiden Räder einer Achse kommt einer der beiden radialen Mitnehmer 14, 17 im Bereich der Konusflächen 27 mit größerem Winkel mit einem der Verriegelungselemente 25 in Kontakt und verdreht ihn, bis er sich an der Konustläche 27 mit größerem Winkel des anderen der beiden Mitnehmer 14, 17 abstützt. In diesem Kupplungszustand sind beide Stabilisatorteile 4, 5 wieder miteinander verbunden, sodass sie zur Aufnahme von Torsionskräften in der Lage sind.
Die relative Vcrdrehbewegung der beiden radialen Mitnehmer 14, 17 wird durch die unter Druck stehende Hydraulikflüssigkeit im Druckraum 20 in vorteilhafter Weise gedämpft.

Die hydraulische Anlage zur Betätigung des Verriegelkolbens 18 kann natürlich auch so ausgelegt sein, dass die Kraft der Druckfeder 21 hydraulisch unterstützt wird, was zu einer Beschleunigung des Kuppelvorganges führt. Bei Ausfall der Hydraulikanlage bleibt die Wirkung der Druckfeder erhalten, die den gekoppelten Zustand beibehält oder ihn herbeiführt.

### Aufstellung der Bezugszeichen

- 1: Rad
- 2: Achse
- 3: Stabilisator
- 4: Stabilisatorteil
- 5: Stabilisatorteil
- 6: Lagerstelle
- 7: Kupplung
- 8: zylindrisches Gehäuse
- 9: Boden
- 10: Verbindungszapfen
- 11: Lagerstelle
- 12: Deckel
- 13: Lagerbohrung
- 14: radialer Mitnchmer
- 15: Welle
- 16: Dichtelemente
- 17: radialer Mitnehmer
- 18: Verriegelkolben
- 19: Druckfederraum
- 20: Druckraum
- 21: Druckfeder
- 22: Leckölanschluss
- 23: inneres Dichtelement
- 24: äußeres Dichtelement
- 25: Verriegelungselement
- 26: Konusfläche mit kleinerem Winkel
- 27: Konusfläche mit größerem Winkel

## Patentansprüche

1. Stabilisator für ein Kraftfahrzeug, bestehend aus zwei, parallel zur Achse (2) ausgerichteten Stabilisatorteilen (4, 5), die jeweils einerseits mit der Radaufhängung eines Rades (1) und andererseits über eine Lagerstelle (6) mit dem Fahrzeugaufbau verbunden sind und beide Stabilisatorteile (4, 5) über eine schaltbare und formschließende Kupplung miteinander verbindbar sind,
**dadurch gekennzeichnet, dass**
- die Kupplung mindestens einen Mitnehmer (14) einerseits und mindestens einen Mitnehmer (17) andererseits besitzt, die beide in Umfangsrichtung mindestens zwei veränderbare Zwischenräume ausbilden und
- die Zwischenräume zur Kraftübertragung durch mindestens zwei begrenzt verschiebbare Verriegelungselemente (25) ausfüllbar sind, wobei
- die Verriegelungselemente (25) und die Mitnehmer (14, 17) in Umfangsrichtung in ständiger positiver Überdeckung stehen und so aufeinander abgestimmt sind, dass die Verriegelungselemente (25) und die Mitnehmer (14, 17) in der gesperrten Endstellung spielfrei miteinander verzahnt sind und in der entsperrten Endstellung in positiver Überdeckung zueinander stehen und mit einem begrenzten Winkelbereich zueinander drehbar sind.

2. Stabilisator nach Anspruch 1,
**dadurch gekennzeichnet, dass** die Mitnehmer (14, 17) radial nach innen ausgerichtet sind und sich in einer radialen Ebene befinden und die Verriegelungselemente (25) zu einem druckbelastbaren Verriegelkolben (18) gehören, wobei die Mitnehmer (14, 17) und der Verriegelkolben (18) auf einer gemeinsamen Achse liegen.

3. Stabilisator nach Anspruch 2,
**dadurch gekennzeichnet, dass** die seitlichen Berührungsflächen der Mitnehmer (14, 17) und der Verriegelungselemente (25) als Konusflächen (26) mit einem kleineren Winkel ausgebildet sind und an den Mitnehmern (14, 17) radiale Anschläge für die Verriegelungselemente (25) ausgebildet sind.

4. Stabilisator nach Anspruch 3,
**dadurch gekennzeichnet, dass** die radialen Anschläge an den freien Enden der Mitnehmer (14, 17) angeordnet sind.

5. Stabilisator nach Anspruch 4,
**dadurch gekennzeichnet, dass** als radiale Anschläge Konusllächen (27) mit einem größeren Winkel vorgesehen sind, wobei die axiale Länge der Konusllächen (27) mit einem größeren Winkel kleiner als die Länge der Konusflächen (26) mit einem kleineren Winkel ist.

6. Stabilisator nach Anspruch 5,
**dadurch gekennzeichnet, dass** die Konusflächen (26) mit kleinerem Winkel einen Winkel besitzt, der die axiale Kraftkomponente einer radial eingeleiteten äußeren Kraft kleiner als die auf die Bodenseite des Verriegelkolbens (18) wirkende Kraft hält.

7. Stabilisator nach Anspruch 2,
**dadurch gekennzeichnet, dass** der Verriegelkolben (18) in Richtung der Mitnehmer (14, 17) von einer Druckfeder (21) belastet ist und in entgegengesetzter Richtung mit einem Druckmedium beaufschlagbar ist.

8. Stabilisator nach Anspruch 7,
**dadurch gekennzeichnet, dass** die Druckfeder durch eine hydraulische Kraft unterstützt wird.

9. Stabilisator nach den Ansprüchen 6 und 8,
**dadurch gekennzeichnet, dass** die Mitnehmer (14, 17) und der Verriegelkolben (18) in einem gemeinsamen zylindrischen Gehäuse (8) untergebracht sind, wobei ein radialer Mitnehmer (17) am Gehäuse (8) und der andere Mitnehmer (14) an einer im Gehäuse (8) gelagerten und nach außen dringenden Welle (15) ausgebildet sind und der Verriegelkolben (18) den Innenraum des zylindrischen Gehäuses (8) in einen Druckfederraum (19) und in einen gegenüberliegenden Druckraum (20) trennt.

10. Stabilisator nach Anspruch 9.
**dadurch gekennzeichnet, dass** der druckfederseitige Boden (9) des zylindrischen Gehäuses (8) als Hubbegrenzung für den Verriegelkolben (18) ausgebildet ist.

## Claims

1. Stabilizer for a motor vehicle, comprising two stabilizer parts (4, 5), which are aligned parallel to the axle (2) and connected in each case, on the one hand, to the wheel suspension of a wheel (1) and, on the other hand, by a bearing point (6) to the vehicle body and both stabilizer parts (4, 5) are connectable to one another by a shiftable and positively engaging clutch,
**characterized in that**
- the clutch has at least one driver (14) on the one side and at least one driver (17) on the other side, which both form in peripheral direction at least two variable interspaces and
- the interspaces for load transmission are fillable by at least two locking elements (25), which are displaceable to a limited extent, wherein
- the locking elements (25) and the drivers (14, 17) in peripheral direction are in constant positive contact and are tuned to one another in such a manner that the locking elements (25) and the drivers (14, 17) in the blocked end position are mutually meshed without play and in the unblocked end position are in positive contact with one another and rotatable within a limited angular range relative to one another.

2. Stabilizer according to claim 1,
**characterized in that** the drivers (14, 17) are aligned radially inwards and situated in a radial plane and the locking elements (25) form part of a pressure-loadable locking piston (18), wherein the drivers (14, 17) and the locking piston (18) lie on a common axis.

3. Stabilizer according to claim 2,
**characterized in that** the lateral contact surfaces of the drivers (14, 17) and of the locking elements (25) take the form of cone surfaces (26) of a smaller angle and radial stops for the locking elements (25) are formed on the drivers (14, 17).

4. Stabilizer according to claim 3,
**characterized in that** the radial stops are disposed on the free ends of the drivers (14, 17).

5. Stabilizer according to claim 4,
**characterized in that**, as radial stops, cone surfaces (27) of a larger angle are provided, wherein the axial length of the cone surfaces (27) of a larger angle is smaller than the length of the cone surfaces (26) of a smaller angle.

6. Stabilizer according to claim 5,
**characterized in that** the cone surfaces (26) of a smaller angle have an angle, which keeps the axial component of force of a radially introduced external force smaller than the force acting upon the head end of the locking piston (18).

7. Stabilizer according to claim 2,
**characterized in that** the locking piston (18) is loaded in the direction of the drivers (14, 17) by a compression spring (21) and is loadable in the opposite direction by a pressure medium.

8. Stabilizer according to claim 7,
**characterized in that** the compression spring is assisted by a hydraulic force.

9. Stabilizer according to claims 6 and 8,
**characterized in that** the drivers (14, 17) and the locking piston (18) are accommodated in a common cylindrical housing (8), wherein one radial driver (17) is formed on the housing (8) and the other driver (14) is formed on an outwardly penetrating shaft (15), which is supported in the housing (8), and the locking piston (18) divides the interior of the cylindrical housing (8) into a compression spring chamber (19) and an opposite pressure chamber (20).

10. Stabilizer according to claim 9,
**characterized in that** the compression-spring-side base (9) of the cylindrical housing (8) is designed as a stroke-arresting device for the locking piston (18).

## Revendications

1. Stabilisateur pour véhicule automobile, composé de deux parties de stabilisateur (4, 5) parallèles aux axes (2) des roues et qui sont reliées chacune d'un côté à la suspension d'une roue (1) et de l'autre côté à la structure du véhicule par un point de palier (6), ces deux parties (4, 5) de stabilisateur pouvant être reliées entre elles par un accouplement débrayable et verrouillable par combinaison de formes,
**caractérisé en ce que**
- l'accouplement possède au moins un entraîneur (14) d'un côté et un. entraîneur (17) de l'autre côté, qui présentent chacun en périphérie au moins deux chambres intermédiaires variables,
- les chambres intermédiaires, pour transmettre une force, peuvent être remplies par au moins deux éléments de verrouillage (25) à coulissement limité,
- les éléments de verrouillage (25) et les entraîneurs (14, 17) se recouvrent en direction périphérique de manière constamment positive et sont accordés entre eux de manière que les éléments de verrouillage (25) et les entraîneurs (14, 17), en position extrême de blocage, sont engrenés l'un dans l'autre sans jeu tandis qu'en position extrême de déblocage, ils se recouvrent positivement en pouvant tourner l'un par rapport à l'autre dans une plage angulaire limitée.

2. Stabilisateur selon la revendication 1,
**caractérisé en ce que**
les entraîneurs (14, 17) sont dans un plan radial orientés radialement vers l'intérieur, et les éléments de verrouillage (25) appartiennent à un piston de verrouillage (18) qui peut être mis sous pression, les entraineurs (14, 17) et le piston de verrouillage (18) étant montés sur un axe commun.

3. Stabilisateur selon la revendication 2,
**caractérisé en ce que**
les portées latérales de contact des entraîneurs (14, 17) et des éléments de verrouillage (25) sont des portées coniques (26) avec un angle assez petit, et les entraîneurs (14, 17) portent des butées radiales pour les éléments de verrouillage (25).

4. Stabilisateur selon la revendication 3,
**caractérisé en ce que**
les butées radiales sont disposées sur les extrémités libres des entraineurs (14, 17).

5. Stabilisateur selon la revendication 4,
**caractérisé en ce qu'**
il est prévu comme butées radiales des portées coniques (27) avec un angle assez grand et la longueur axiale des portées (27) est inférieure à celle des portées coniques (26) ayant un angle assez petit.

6. Stabilisateur selon la revendication 5,
**caractérisé en ce que**
dans les portées coniques (26) ayant un angle assez petit, cet angle est tel qu'il maintient la composante axiale d'une force externe introduite radialement inférieure à la force qui agit sur le côté de fond du piston de verrouillage (18).

7. Stabilisateur selon la revendication 2,
**caractérisé en ce que**
le piston de verrouillage (18) est chargé en direction des entraîneurs (14, 17) par un ressort de poussée (21) et, dans le sens inverse par un fluide de pression.

8. Stabilisateur selon la revendication 7,
**caractérisé en ce que**
le ressort de poussée est assisté par une force hydraulique.

9. Stabilisateur selon l'une quelconque des revendications 6 et 8,
**caractérisé en ce que**
les entraîneurs (14, 17) et le piston de verrouillage (18) sont logés dans un boîtier cylindrique commun, un entraîneur radial (17) étant formé sur le boîtier (8) tandis que l'autre entraîneur (14) est porté par un arbre monté dans le boîtier (8) et sortant à l'extérieur (15), le piston de verrouillage (18) divisant le volume intérieur du boîtier cylindrique (8) en une chambre (19) de ressort de poussée et une chambre de pression (20) qui fait face à la précédente.

10. Stabilisateur selon la revendication 9,
**caractérisé en ce que**
le fond (9), situé du côté du ressort de poussée, du boîtier cylindrique (8) sert à limiter la course du piston de verrouillage (18).
